# EUROPEAN PATENT APPLICATION

(11) **EP 4 411 773 A1**
(43) Date of publication of application: **07.08.2024**
(21) Application number: 21959308.4
(22) Date of filing: 29.09.2021
(51) Int. Cl.: H01H 33/65, H01H 1/44, H02B 13/045

(54) **RING-SHAPED COIL SPRING OF SWITCHGEAR AND SWITCHGEAR USING SAME**

(71) Applicant: MITSUBISHI ELECTRIC CORPORATION, Chiyoda-ku Tokyo 100-8310 (JP)
(72) Inventor: INOUE Naoaki, Tokyo 100-8310 (JP); YOSHIOKA Yoshiki, Tokyo 102-0073 (JP)
(74) Representative: Witte, Weller & Partner Patentanwälte mbB
(86) International application number: PCT/JP2021/035833
(87) International publication number: WO 2023/053261

(57) **Abstract**

In order to adapt to a lineup of various connection portions of a gas-insulated switchgear (1), springs having various spring loads are needed, so that the types of components increase. On the other hand, if a spring corresponding to the maximum conduction current is set as standard specifications, such a spring has an excessive quality for a product for small conduction current. Accordingly, an end of a ring-shaped spring (8a, 8b) having such a structure that a metal material for spring is formed in a ring shape so as to partially overlap each other is passed through a spring gap of a ring-shaped coil spring (7d) to the inside of the coil, thereby mounting the ring-shaped spring. Thus, it is possible to obtain a necessary contact load without increasing the types of the ring-shaped coil spring (7d).

## Description

### TECHNICAL FIELD

The present disclosure relates to a ring-shaped coil spring of switchgear, and a switchgear using the same.

### BACKGROUND ART

A switchgear is composed of a main circuit portion in which high voltage is applied, an operation mechanism portion for driving a switch of a main circuit, and a control circuit portion. In the main circuit portion, there is a part (1) where the switch is opened/closed, a part (2) where a function is not obtained if a connection part between the switch and another device is fixed by bolt-fastening, or a part (3) where it is difficult to perform bolt-fastening in view of assemblability. For these parts, conductor connection is made using a contactor instead of bolt-fastening.

The contactor is provided with a garter spring imparted with a contact-pressure load needed for ensuring a function of not only allowing conduction of ordinary conduction current in the switchgear but also allowing conduction of short-time large current (see, for example, Patent Document 1).

### CITATION LIST

### PATENT DOCUMENT

Patent Document 1: Japanese Patent No. 5188176

### SUMMARY OF THE INVENTION

### PROBLEM TO BE SOLVED BY THE INVENTION

However, in order to adapt to a lineup of various contactors of switchgears, garter springs having different spring loads are needed, so that component types increase. On the other hand, if a garter spring corresponding to the maximum conduction current is set as standard specifications, such a garter spring has an excessive quality for a product for small conduction current.

The present disclosure has been made to solve the above problem, and an object of the present invention is to provide a ring-shaped coil spring of switchgear that can obtain a necessary contact load without increasing types of ring-shaped coil springs.

### MEANS TO SOLVE THE PROBLEM

A ring-shaped coil spring of switchgear according to the present disclosure is mounted around a conductor and includes, in a coil, a ring-shaped spring for increasing a contact load to the conductor.

### EFFECT OF THE INVENTION

The ring-shaped coil spring of switchgear according to the present disclosure can obtain a necessary contact load without increasing types of ring-shaped coil springs.

### BRIEF DESCRIPTION OF THE DRAWINGS

[FIG. 1] FIG. 1 is a side sectional view of a gas-insulated switchgear according to embodiment 1.
[FIG. 2] FIG. 2 is an enlarged sectional view of a conductor contact portion according to embodiment 1.
[FIG. 3] FIG. 3 is a sectional view of a ring-shaped coil spring.
[FIG. 4] FIG. 4 is a perspective view of a ring-shaped spring according to embodiments 1 and 2.
[FIG. 5] FIG. 5 is a sectional view of the ring-shaped coil spring to which the ring-shaped spring is mounted according to embodiment 1.
[FIG. 6] FIG. 6 is a sectional view of a conductor contact portion using a coil spring contact according to embodiment 2.
[FIG. 7] FIG. 7 is a sectional view of the coil spring contact to which the ring-shaped springs are mounted according to embodiment 2.

### DESCRIPTION OF EMBODIMENTS

Hereinafter, preferred embodiments of a ring-shaped coil spring of switchgear according to the present disclosure will be described with reference to the drawings. The ring-shaped coil spring of switchgear according to the present disclosure is applicable to a variety of switchgears. In the present embodiment, application to a gas-insulated switchgear will be described as an example. The same features and corresponding parts are denoted by the same reference characters, and the detailed description thereof is omitted. Also in other embodiments, components denoted by the same reference characters will not be described repeatedly.

### Embodiment 1

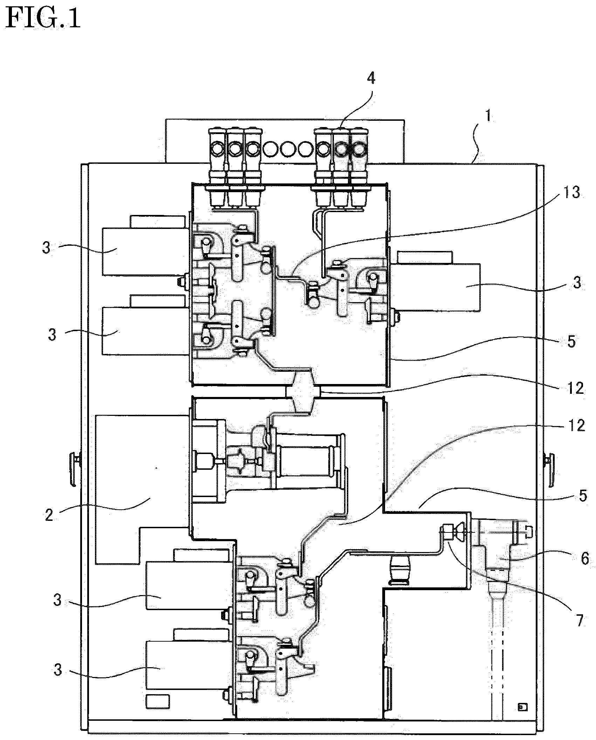

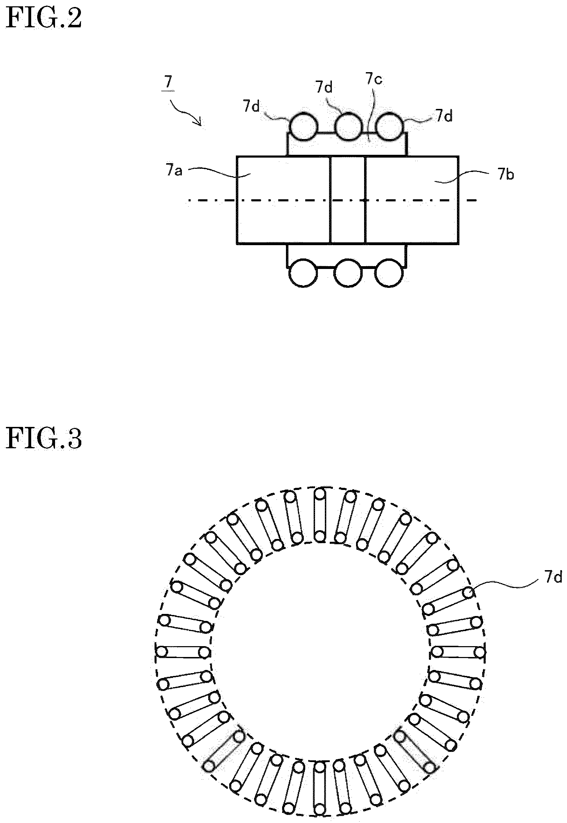

FIG. 1 is a side sectional view of a gas-insulated switchgear, and FIG. 2 is an enlarged sectional view of a conductor contact portion. The gas-insulated switchgear 1 includes a circuit breaker 2, disconnectors and ground switches 3, busbars 4, power cables 6, and the like which are provided in sealed containers 5. In the sealed containers 5, insulation gas is sealed. A connection part between a conductor 7a in the sealed container 5 and a conductor 7b of the power cable 6 is referred to as a conductor contact portion 7.

The conductor contact portion 7 is a part where it is difficult to perform bolt-fastening. A connection portion 12 between the circuit breaker 2 and a conductor, or a connection portion 13 between the ground switch 3 and a conductor, is formed by bolt-connection, in FIG. 1. However, the connection portions may have a conductor contact structure in which the same member as the conductor contact portion 7 is interposed. In this case, one conductor is connected to the conductor 7a, and another conductor is connected to the conductor 7b. In addition, conductor contact structures are generally used also for parts where the switches are opened/closed.

In FIG. 2, the conductor contact portion 7 has a contactor 7c mounted around the conductor 7a and the conductor 7b and contacting with the conductor 7a and the conductor 7b so as to clamp them. Around the contactor 7c, three ring-shaped coil springs 7d for applying a necessary load to the contactor 7c are provided to fix the conductor 7a and the conductor 7b.

The ring-shaped coil spring 7d is made of a general metal material for spring, such as a piano wire, a hard steel wire, or a stainless steel wire, and is obtained by forming a coil spring into a ring shape as shown in FIG. 3. The conductor 7a, the conductor 7b, and the contactor 7c are made of a highly conductive material such as copper or aluminum. In FIG. 2, the conductor 7a and the conductor 7b contact with the contactor 7c, and the contactor 7c is imparted with a load inward in the radial direction of the ring-shaped coil spring 7d.

Accordingly, contact loads are produced between the contactor 7c and the conductor 7a and between the contactor 7c and the conductor 7b. Thus, current can be conducted through a path between the conductor 7a and the contactor 7c and a path between the contactor 7c and the conductor 7b. As larger current is conducted, a greater electromagnetic repulsive force is produced at a contact part, and therefore a higher contact load is needed for overcoming the electromagnetic repulsive force.

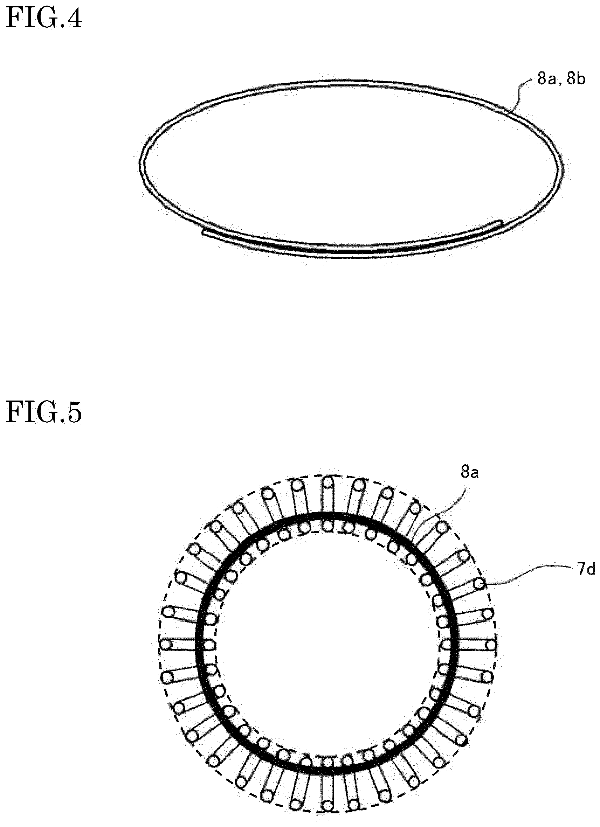

In order to impart the above high contact load, a ring-shaped spring 8a is mounted to the ring-shaped coil spring 7d. The ring-shaped spring 8a is made of a metal material for spring, such as a piano wire, a hard steel wire, or a stainless steel wire. As shown in FIG. 4, the metal material for spring is formed into a ring shape so as to partially overlap each other. The ring diameter of the ring-shaped spring 8a is matched to the diameter on the inner circumferential side of the ring-shaped coil spring in advance.

FIG. 5 is a sectional view of the ring-shaped coil spring 7d to which the ring-shaped spring 8a is mounted. On the inner side of the ring-shaped coil spring 7d, the ring-shaped spring 8a is mounted in a state of being matched to the inner diameter of the ring-shaped coil spring 7d and along the inner circumferential side in the coil of the ring-shaped coil spring 7d. In assembling, an end of the ring-shaped spring 8a is passed through a spring gap of the ring-shaped coil spring 7d, whereby the ring-shaped spring 8a is mounted inside the ring-shaped coil spring 7d.

In a case where the ring-shaped coil spring 7d to which the ring-shaped spring 8a is mounted is used for the conductor contact portion 7 as shown in FIG. 2, a load for compressing the contactor 7c inward in the radial direction by the ring-shaped spring 8a is added to a load for compressing the contactor 7c inward in the radial direction by the ring-shaped coil spring 7d, thus providing an effect of increasing the contact load to the contactor 7c which is needed for current conduction in the conductor contact portion 7. Therefore, in a case where there is a lineup of various conduction currents, it is possible to adapt to such various conduction currents by mounting the ring-shaped spring 8a in the ring-shaped coil spring only in a case of large current while using the ring-shaped coil spring as standard specifications. That is, only one type of ring-shaped coil spring is needed, so that increase in the types of components can be suppressed and the cost is reduced.

With the configuration described above, it is possible to standardize the ring-shaped coil spring 7d without increasing the types thereof, and increase the contact load by using the ring-shaped coil spring 7d provided with the ring-shaped spring 8a only in a case where conduction current is large.

In addition, the inserted ring-shaped spring 8a also has an effect of preventing the ring-shaped coil spring 7d from coming off even when a joined part of the ring-shaped coil spring 7d by welding or swaging is disconnected due to a manufacturing fault of the joined part.

Further, regarding the ring-shaped spring 8a inserted in the ring-shaped coil spring 7d, the number of mounted ring-shaped springs 8a is not limited to one and may be two or more. Thus, the load for compression inward in the radial direction by the ring-shaped spring 8a can be adjusted by changing the number of the ring-shaped springs 8a. In a case of mounting two or more ring-shaped springs 8a, the compression load inward in the radial direction may be changed by changing the materials of the ring-shaped springs 8a or changing the ring diameters thereof.

Further, the ring-shaped spring 8a wound by two or more turns may be used. Thus, the load for compression inward in the radial direction by the ring-shaped spring 8a can be adjusted by changing the number of turns.

### Embodiment 2

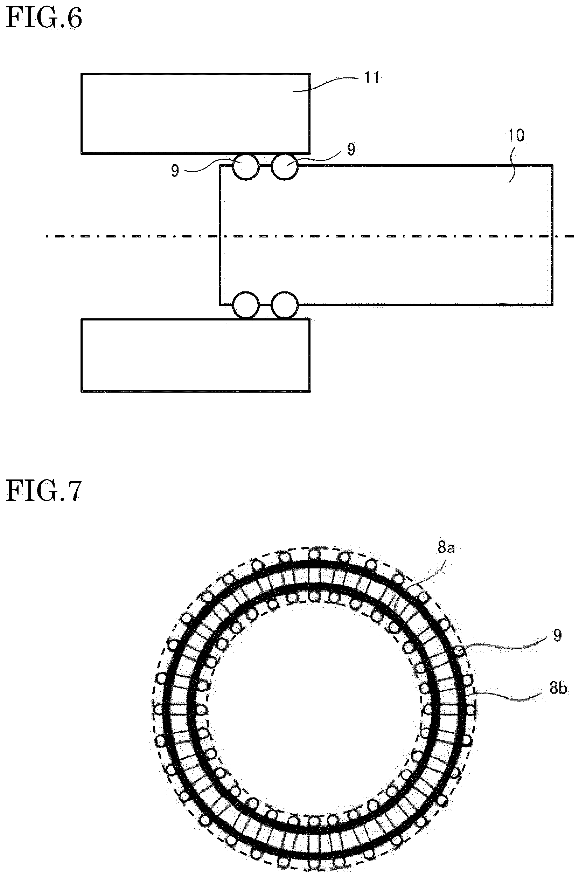

FIG. 6 is a sectional view of a conductor contact portion of a contact (hereinafter, coil spring contact) using a ring-shaped coil spring according to embodiment 2. The ring-shaped coil spring 7d shown in FIG. 2 is made of a general metal material for spring, such as a piano wire, a hard steel wire, or a stainless steel wire, and therefore is low in current conduction performance. In embodiment 1 shown in FIG. 2, current is conducted via the contactor 7c. The contact pressure is imparted by the ring-shaped coil spring 7d. Thus, respective functions are separated.

Coil spring contacts 9 shown in FIG. 6 are made of a highly conductive metal material for spring, such as a copper alloy, and the coil spring contacts 9 have both functions of conducting current and imparting a contact pressure. As shown in FIG. 6, the cylindrical conductor 10 to which the coil spring contacts 9 are mounted is inserted into a recessed conductor 11, whereby current can be conducted through a path between the cylindrical conductor 10 and the coil spring contacts 9 and a path between the coil spring contacts 9 and the recessed conductor 11.

FIG. 7 is a sectional view of the coil spring contact to which the ring-shaped spring is mounted according to embodiment 2. In embodiment 1, as shown in FIG. 5, the ring-shaped spring 8a matched to the inner diameter of the ring-shaped coil spring 7d is added, to add a spring load inward in the radial direction.

On the other hand, in a case of FIG. 6, the coil spring contact 9 applies contact loads to both of the inner side and the outer side. That is, as shown in FIG. 7, the ring-shaped spring 8a matched to the inner diameter of the coil spring contact 9 and along the inner circumferential side in the coil of the coil spring contact 9, and a ring-shaped spring 8b matched to the outer diameter of the coil spring contact 9 and along the outer circumferential side in the coil of the coil spring contact 9, are mounted to the coil spring contact 9, whereby it becomes possible to increase the contact loads to the radially inner side and the radially outer side of the coil spring contact 9.

The ring-shaped spring 8b is made of a metal material for spring, such as a piano wire, a hard steel wire, or a stainless steel wire, as with the ring-shaped spring 8a. As shown in FIG. 4, the metal material for spring is formed into a ring shape so as to partially overlap each other. The ring diameter of the ring-shaped spring 8b is matched to the diameter on the outer circumferential side of the ring-shaped coil spring in advance.

In assembling, an end of the ring-shaped spring 8b is passed through a spring gap of the coil spring contact 9, whereby the ring-shaped spring 8b is mounted inside the coil spring contact 9.

Further, regarding the ring-shaped spring 8b inserted in the ring-shaped coil spring 7d, the number of mounted ring-shaped springs 8b is not limited to one and may be two or more, as with the ring-shaped spring 8a. Thus, the load for compression outward in the radial direction by the ring-shaped spring 8b can be adjusted by changing the number of the ring-shaped springs 8b. In a case of mounting two or more ring-shaped springs 8b, the compression load outward in the radial direction may be changed by changing the materials of the ring-shaped springs 8b or changing the ring diameters thereof.

Further, as with the ring-shaped spring 8a, the ring-shaped spring 8b wound by two or more turns may be used. Thus, the load for compression inward in the radial direction by the ring-shaped spring 8b can be adjusted by changing the number of turns.

Thus, it becomes possible to standardize the type of the coil spring contact 9 as described above, and add one or both of the ring-shaped springs 8a, 8b only in a case where conduction current is large. In addition, the ring-shaped springs 8a, 8b also have an effect of preventing the coil spring contact 9 from coming off even when a joined part of the coil spring contact 9 by welding or swaging is disconnected due to a manufacturing fault of the joined part.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: gas-insulated switchgear
- 2: circuit breaker
- 3: ground switch
- 4: busbar
- 5: sealed container
- 6: power cable
- 7: conductor contact portion
- 7a: conductor
- 7b: conductor
- 7c: contactor
- 7d: ring-shaped coil spring
- 8a,: 8b ring-shaped spring
- 9: coil spring contact
- 10: cylindrical conductor
- 11: recessed conductor

## Claims

1. A ring-shaped coil spring of switchgear, the ring-shaped coil spring being mounted around a conductor, the ring-shaped coil spring comprising, in a coil, a ring-shaped spring for increasing a contact load to the conductor.

2. The ring-shaped coil spring of switchgear according to claim 1, wherein
the conductor is a contactor that clamps and fixes two conductors.

3. The ring-shaped coil spring of switchgear according to claim 1 or 2, wherein
the ring-shaped spring is mounted along an inner circumferential side in the coil.

4. A ring-shaped coil spring of switchgear, the ring-shaped coil spring being mounted around a second conductor formed so as to be inserted and connected to a first conductor, wherein
a ring-shaped spring is mounted along an outer circumferential side in a coil so as to increase a contact load to the first conductor.

5. The ring-shaped coil spring of switchgear according to claim 4, wherein
another ring-shaped spring than the ring-shaped spring is mounted along an inner circumferential side in the coil, so as to increase a contact load to the second conductor.

6. A switchgear comprising the ring-shaped coil spring of switchgear according to any one of claims 1 to 5.
